# EUROPÄISCHE PATENTANMELDUNG

(11) **EP 1 707 340 A1**
(43) Veröffentlichungstag der Anmeldung: **04.10.2006**
(21) Anmeldenummer: 06006187.6
(22) Anmeldetag: 24.03.2006
(51) Int. Cl.: B29C 65/22

(54) **Siegelgerät**

(30) Priorität: 29.03.2005 DE 202005005126 U
(71) Anmelder: Wolf, Hans, 74821 Mosbach-Sattelbach (DE); Wolf, Christian, 74821 Mosbach (DE)
(72) Erfinder: Wolf, Hans, 74821 Mosbach-Sattelbach (DE); Wolf, Christian, 74821 Mosbach (DE)
(74) Vertreter: Wolf, Michael

(57) **Zusammenfassung**

Die Erfindung betrifft ein Siegelgerät zum Schweißversiegeln von verpackungen, insbesondere Sterilgutverpackungen in Form von verpackungsbeuteln, umfassend ein Schweißwerkzeug (1) mit mindestens einem Heizelement (2). Nach der Erfindung ist vorgesehen, dass das Heizelement (2) verpackungsseitig ein mit einem Transformator (3) bestrombares Heizband (4) aufweist, aus einem schlecht wärmeleitenden Trägerelement (5) gebildet und mit einem Temperatursensor (6) versehen ist, wobei sowohl der Temperatursensor (6) als auch der Transformator (3) zur Temperaturregelung des Heizbandes (4) mit einer Regelelektronik (7) verbunden sind.

## Beschreibung

Die Erfindung betrifft ein Siegelgerät zum Schweißversiegeln von Verpackungen, insbesondere Sterilgutverpackungen in Form von Verpackungsbeuteln, gemäß dem Oberbegriff des Patentanspruchs 1.

Ein Siegelgerät der eingangs genannten Art ist nach der DE 20 2004 008 007 U1 bekannt. Dieses umfasst u. a. ein Schweißwerkzeug mit zwei Heizelementen (mindestens eines ist erforderlich), die ober- und unterhalb einer Verpackungsbeutelförderstrecke angeordnet sind und zusammen mit nachgeordneten Andruck- bzw. Siegelrollen zum versiegeln der verpackungsbeutel dienen.

Als Heizelemente werden bei diesem Siegelgerät sogenannte Heizpatronen verwendet. Diese bestehen aus einem auf einen Keramikkörper gewickelten Metallstreifen, der zusammen mit dem Keramikkörper in einem Metallmantel positioniert ist. Durch Bestromung des Metallstreifens erwärmt sich dieser. Dies wiederum führt zum Anschmelzen der Kunststofffolie eines in die Nähe gebrachten Verpackungsbeutels, so dass dieser mittels der Andruckrollen versiegelt werden kann.

Diese Technik hat sich an sich bestens bewährt. Allerdings sind die Heizelemente relativ träge, d. h. dem Bedürfnis, eine andere Temperatur des Heizelements einzustellen, kann mit diesen Heizelementen nur relativ langsam nachgekommen werden.

Der Erfindung liegt demgemäß die Aufgabe zugrunde, ein Siegelgerät der eingangs genannten Art bezüglich der Regelbarkeit der Heizelemente zu verbessern.

Diese Aufgabe ist mit einem Siegelgerät der eingangs genannten Art durch die im Kennzeichen des Patentanspruchs 1 aufgeführten Merkmale gelöst.

Nach der Erfindung ist also vorgesehen, dass das Heizelement verpackungsseitig ein mit einem Transformator bestrombares Heizband aufweist, aus einem schlecht wärmeleitenden Trägerelement gebildet und mit einem Temperatursensor versehen ist, wobei sowohl der Temperatursensor als auch der Transformator zur Temperaturregelung des Heizbandes mit einer Regelelektronik verbunden sind.

Mit anderen Worten ausgedrückt, weist das erfindungsgemäße Heizelement (von dem natürlich auch zwei oder mehrere vorgesehen sein können), ein auf dem Trägerelement aufliegendes, von aussen zugängliches Heizband auf, dessen mittels eines Transformators erzeugte Wärmeleistung mit einem Temperatursensor und einer Regelelektronik regelbar ist, und zwar stufenlos und bei geringer thermischer Trägheit.

Andere vorteilhafte Weiterbildungen des erfindungsgemäßen Siegelgerätes sind in den abhängigen Patentansprüchen genannt.

Das erfindungsgemäße Siegelgerät einschließlich seiner vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: perspektivisch von vorn das erfindungsgemäße Siegelgerät; und
- Figur 2: als Prinzipskizze die erfindungsgemäße Ausbildung und Verschaltung des Heizelements mit einem Transformator und einer Regelelektronik.

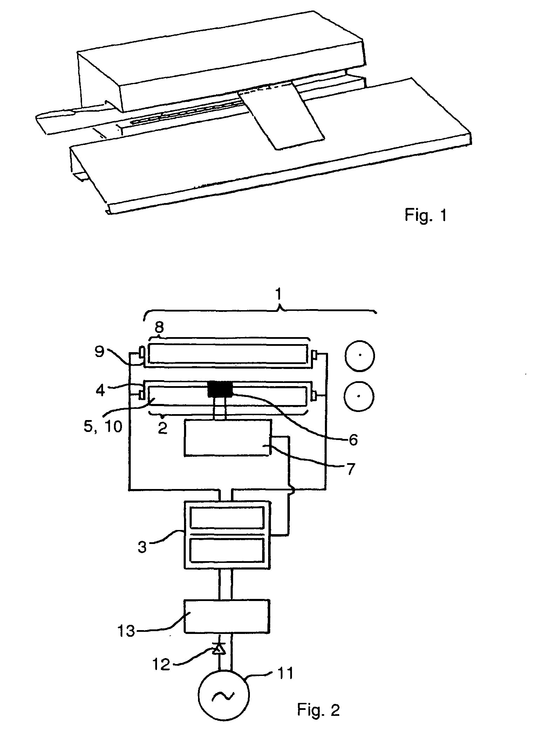

In den beiden Figuren ist das erfindungsgemäße Siegelgerät zum Schweißversiegeln von Verpackungen, insbesondere Sterilgutverpackungen in Form von Verpackungsbeuteln, dargestellt. Dieses umfasst u. a. ein Schweißwerkzeug 1 mit mindestens einem Heizelement 2. Diesbezüglich wird zur weiteren Information auch auf die Figur 2 der DE 20 2004 008 007 U1 verwiesen.

Wesentlich für das erfindungsgemäße Siegelgerät ist nun (siehe hierzu Figur 2), dass das Heizelement 2 verpackungsseitig ein mit einem Transformator 3 bestrombares Heizband 4 aufweist, aus einem schlecht wärmeleitenden Trägerelement 5 gebildet und mit einem Temperatursensor 6 versehen ist, wobei sowohl der Temperatursensor 6 als auch der Transformator 3 zur Temperaturregelung des Heizbandes 4 mit einer Regelelektronik 7 verbunden sind.

Bezüglich des Heizbandes 4 ist dabei hinsichtlich einer besonders schnellen Temperaturregelbarkeit vorteilhaft vorgesehen, dass dieses in direktem Kontakt zum Temperatursensor 6 steht.

Wie in der DE 20 2004 008 007 U1 ist darüber hinaus bei der dargestellten Ausführungsform vorteilhaft vorgesehen, dass dem Heizelement 2 ein weiteres Heizelement 8 zugeordnet ist, wobei eine zu versiegelnde Verpackung zwischen beiden Heizelementen 2, 8 hindurchführbar ist (siehe hierzu auch Figur 1, in der ein verpackungsbeutel zwischen zwei nicht genauer erkennbaren Heizelementen hindurchgeführt wird),

Bezüglich dieses zweiten Heizelements 2 ist zur verbesserten Wärmeeinbringung vorgesehen, dass dieses ein mit dem Transformator 3 verbundenes Heizband 9 aufweist.

Um eine hohe Wärmeabstrahlung des Heizbandes 4, 9 zu gewährleisten, ist ferner vorgesehen, dass dieses einen hohen spezifischen elektrischen Widerstand aufweist. Dazu ist es aus Stahl, vorzugsweise Edelstahl, vorzugsweise V2A-Edelstahl, vorzugsweise der Güte 1.4571 (nach EN 10088 bzw. EN 10258 R), gebildet ist, und zwar vorzugsweise als maximal 1 mm dicker Streifen.

Hinsichtlich des Trägerelements 5 ist vorgesehen, dass dieses aus einem Wärmeschutzmaterial 10, vorzugsweise sogenanntes GL-M-Material, besteht. Dieserhalb wird auf die Internetseite http://www.brandenburger-gruppe.de verwiesen. Dort ist zu dem GL-M-Material ausgeführt: "Der Isolierwerkstoff GL-M ist hervorragend geeignet für Isolationen mit hoher thermischer Dauerbelastung über 250 °C bei gleichzeitigem Auftreten von hohen Druckbelastungen. Bemerkenswerte Anwendungen finden sich in thermisch hochbelasteten Pressen und Stanzvorrichtungen als vollflächig fest eingespannter Wärmeschutz. Weitere Einsatzgebiete finden sich in Lötanlagen, Induktions- und Lichtbogenöfen sowie im Schaltschrank- und Apparatebau."

Um die Temperatur des Heizelements möglichst genau an die jeweiligen Siegelerfordernisse anpassen zu körinen, ist der Transformator 3 bzw. dessen Leistung mittels der Regelelektronik 7 stufenlos regelbar ausgebildet.

Dabei ist der Transformator 3 einerseits mit einem Wechselstromnetz 11 (beispielsweise 110 oder 230 Volt) und andererseits mit dem Heizband 4, 9 verbunden. zur verbesserung des Wirkungsgrades des Siegelgerätes ist hierzu zwischen dem Wechselstromnetz 11 und dem Transformator 3 ein Gleichrichter 12 sowie ein Resonanzwandler 13 angeordnet, wobei dieser zur Erzeugung einer hochfrequenten Wechselspannung, vorzugsweise einer Wechselspannung von 20 kHz, ausgebildet ist, die dem Heizband 4, 9 zugeführt wird.

### Bezugszeichenliste

- 1: Schweißwerkzeug
- 2: Heizelement
- 3: Transformator
- 4: Heizband
- 5: Trägerelement
- 6: Temperatursensor
- 7: Regelelektronik
- 8: Heizelement
- 9: Heizband
- 10: Wärmeschutzmaterial
- 11: Wechselstromnetz
- 12: Gleichrichter
- 13: Resonanzwandler

## Patentansprüche

1. Siegelgerät zum Schweißversiegeln von Verpackungen, insbesondere Sterilgutverpackungen in Form von Verpackungsbeuteln, umfassend ein Schweißwerkzeug (1) mit mindestens einem Heizelement (2),
**dadurch gekennzeichnet,**
**dass** das Heizelement (2) verpackungsseitig ein mit einem Transformator (3) bestrombares Heizband (4) aufweist, aus einem schlecht wärmeleitenden Trägerelement (5) gebildet und mit einem Temperatursensor (6) versehen ist, wobei sowohl der Temperatursensor (6) als auch der Transformator (3) zur Temperaturregelung des Heizbandes (4) mit einer Regelelektronik (7) verbunden sind.

2. Siegelgerät nach Anspruch 1,
**dadurch gekennzeichnet,**
**dass** das Heizband (4) in direktem Kontakt zum Temperatursensor (6) steht.

3. Siegel gerät nach Anspruch 1 oder 2,
**dadurch gekennzeichnet,**
**dass** dem Heizelement (2) ein weiteres Heizelement (8) zugeordnet ist, wobei eine zu versiegelnde Verpackung zwischen beiden Heizelementen (2, 8) hindurchführbar ist.

4. Siegelgerät nach Anspruch 3,
**dadurch gekennzeichnet,**
**dass** das zweite Heizelement (8) ein mit dem Transformator (3) verbundenes Heizband (9) aufweist.

5. Siegelgerät nach einem der Ansprüche 1 bis 4,
**dadurch gekennzeichnet,**
**dass** das Heizband (4, 9) einen hohen spezifischen elektrischen Widerstand aufweist, vorbei das Heizband (4, 9) vorzugsweise aus Stahl, vorzugsweise aus Edelstahl, vorzugsweise V2A-Edelstahl, vorzugsweise der Güte 1.4571, gebildet ist.

6. Siegelgerät nach einem der Ansprüche 1 bis 5,
**dadurch gekennzeichnet,**
**dass** das Trägerelement (5) aus einem Wärmeschutzmaterial (10), vorzugsweise sogenanntes GL-M-Material, besteht.

7. Siegelgerät nach einem der Ansprüche 1 bis 6,
**dadurch gekennzeichnet,**
**dass** der Transformator (3) bzw. dessen Leistung mittels der Regelelektronik (7) stufenlos regelbar ausgebildet ist.

8. Siegelgerät nach einem der Ansprüche 1 bis 7,
**dadurch gekennzeichnet,**
**dass** der Transformator (3) einerseits mit einem Wechselstromnetz (11) und andererseits dem Heizband (4, 9) verbunden ist.

9. Siegelgerät nach Anspruch 8,
**dadurch gekennzeichnet,**
**dass** zwischen dem Wechselstromnetz (11) und dem Transformator (3) ein Gleichrichter (12) sowie ein Resonanzwandler (13) angeordnet ist.

10. Siegelgerät nach Anspruch 9,
**dadurch gekennzeichnet,**
**dass** der Resonanzwandler (13) zur Erzeugung einer hochfrequenten Wechselspannung, vorzugsweise einer Wechselspannung von 20 kHz, ausgebildet ist.
